# EUROPEAN PATENT APPLICATION

(11) **EP 1 209 833 A1**
(43) Date of publication of application: **29.05.2002**
(21) Application number: 01938591.3
(22) Date of filing: 11.06.2001
(51) Int. Cl.: H04H 7/00, H04H 1/00, H04N 5/44, H04B 1/16

(54) **TRANSMISSION SYSTEM, RECEIVER, AND BROADCAST SYSTEM**

(30) Priority: 13.06.2000 JP 2000177630
(71) Applicant: MATSUSHITA ELECTRIC INDUSTRIAL CO., LTD., Kadoma-shi, Osaka 571-0050 (JP)
(72) Inventor: SHINOHARA, Hiroki, Yokohama-shi, Kanagawa 244-0801 (JP)
(74) Representative: Grünecker, Kinkeldey, Stockmair & Schwanhäusser Anwaltssozietät
(86) International application number: JP0104910
(87) International publication number: WO0197417

(57) **Abstract**

A purpose of the present invention is to realize a multimedia EPG capable of accepting a program changed in real time, and also capable of realizing higher power of expressions by using a still image and a moving picture.

In other words, a broadcasting system of the present invention is arranged by a transmission system (110) comprised of: program scheduling information acquiring means (101) for acquiring program scheduling information from an externally-provided program scheduling information providing firm (108) and a broadcasting network (109); program scheduling information encoding means (102) for encoding the acquired program scheduling information; and transfer means (103) for transferring the coded data by way of either a broadcasting network or a communication. The broadcasting system of the present invention is also arranged by a receiver (112) comprised of: program scheduling information receiving means (104) for receiving the program scheduling information transferred from the transmission system (110); program scheduling information display means (107) for displaying thereon this received program scheduling information; storage means (113) for storing thereinto the program control information and the program scheduling information; and merging means (106) for updating the content of the program scheduling information based upon the content of the program control information.

## Description

### <Technical Field>

The present invention is related to a transmission system for transmitting broadcasting program information by a digital broadcasting system, and a broadcasting system equipped with a receiver for receiving the broadcasting program information transmitted by the transmission system.

### <Technical Background>

Conventionally, while a receiving apparatus provided in this sort of broadcasting system receives a service information (SI) signal transmitted in a periodic manner, this receiving apparatus is capable of displaying a program table by using this received SI signal in accordance with a pre-installed application program which cannot be rewritten. Also, while a program table application using a still image, voice, and a moving picture is transmitted by way of a data broadcasting system by using an XML (extensible markup language) as a base, such a program table having higher power of expressions may be displayed by a receiving apparatus.

However, although the program table displayed by employing the SI signal is capable of accepting a change in program information in real time, since this program table is displayed by employing the pre-installed application, there is such a problem that this program table owns no extensible characteristics, and the power of expressions is limited. Also, since the program table displayed by the data broadcasting system owns the extensible characteristics, this program table may have superior power of expressions. However, this program table owns such a problem that the program table cannot accept a change in program information in real time.

The present invention has been made to solve such problems, and therefore, has an object to provide a broadcasting system capable of providing an Electronic Program Guide (EPG) service which can accept a change in program information in real time and also can have better extensible characteristics as well as superior power of expressions in such a manner that program control information such as an SI signal is merged with program information expressed by a data broad casting system.

### <DISCLOSURE OF THE INVENTION>

A broadcasting system, according to the present invention, is featured by comprising a transmission system and a receiver, the transmission system being equipped with program scheduling information acquiring means for acquiring program scheduling information from an externally-provided program scheduling information providing firm and a broadcasting network; program scheduling information encoding means for encoding the acquired program scheduling information based upon such an encoding method as an XML; and transfer means for transferring the coded data by way of either a broadcasting network or a communication; the receiver being equipped with program scheduling information receiving means for receiving the program scheduling information transferred from the transmission system; program scheduling information display means for displaying thereon this received program scheduling information; program control information receiving means for receiving from a broadcasting network and the like, program control information which describes therein a program content, program starting time, program duration, and the like, which are updated in real time due to a special newscast and an extension of a sports broadcasting program; and merging means for updating the content of the program scheduling information based upon the content of the program control information.

Also, a broadcasting system, according to the present invention, is featured by comprising: a transmission system in which link information describing therein a relationship between a content of program control information and a content of program scheduling information described by an XML is transferred in connection with program scheduling information by transfer means; and a receiver comprised of: program table generating/display means for generating a program table from the program control information and for displaying the produced program table; and display control means for managing a relationship between the program control information and the program scheduling information described by the XML based upon the link information so as to control displays of the program scheduling information and the program table, whereby the program scheduling information can be displayed in conjunction with the program table.

In the transmission system according to the present invention, the program control information which describes therein the program content, the program starting time, and the program duration, which are updated in real time, is received. In the program scheduling information encoding means, the content of the program control information is merged with the content of the program scheduling information so as to be coded. Then, the coded information is transferred by the transfer means.

### <Brief Description of the Drawings>

Fig. 1 is a block diagram of a transmission system and a receiver according to an embodiment mode 1 of the present invention.
Fig. 2 is a schematic diagram for representing an example of broadcasting program edition information according to the embodiment mode 1 of the present invention.
Fig. 3 is a schematic diagram for showing an example of a program content description of the program scheduling information according to the embodiment mode 1 of the present invention.
Fig. 4 is a schematic diagram for indicating an example of program control information according to the embodiment mode 1 of the present invention.
Fig. 5 is a schematic diagram for indicating an example of a multimedia EPG service screen image according to the embodiment mode 1 of the present invention.
Fig. 6 is a flow chart for describing an automatic generating operation of a multimedia EPG application in the transmission system according to the embodiment mode 1 of the present invention.
Fig. 7 is a schematic diagram for indicating an example of multimedia EPG program scheduling information location in the embodiment mode 1 of the present invention.
Fig. 8 is a flow chart for explaining a merging process operation executed in the receiver according to the embodiment mode 1 of the present invention.
Fig. 9 is a block diagram for showing a receiver according to an embodiment mode 2 of the present invention.
Fig. 10 is a schematic diagram for representing an example of link information according to the embodiment mode 2 of the present invention.
Fig. 11 is a schematic diagram for representing an example of a skeleton of a multimedia EPG application which is supplied from a program scheduling information providing firm in the embodiment mode 2 of the present invention.
Fig. 12 is a sequential diagram for describing an inter-operation sequence between an EPG application and a broadcasting program table which is produced from program control information acquired from broadcasting network on the side of the receiver according to the embodiment mode 2 of the present invention.

It should be noted that reference numerals shown in the drawings are given as follows: Reference numeral 101 shows program scheduling information acquiring means, reference numeral 102 indicates program scheduling information encoding means, reference numeral 103 denotes transfer means, reference numeral 104 represents program scheduling information receiving means, reference numeral 105 indicates program control information receiving means, reference numeral 106 shows merging means, reference numeral 107 represents program scheduling information display means, reference numeral 108 represents a program scheduling information providing firm, reference numeral 110 shows a transmission system, reference numeral 112 indicates a receiver, and reference numeral 113 is a storage apparats. Also, reference numeral 201 shows programlocation, reference numeral 202 denotes a program description, reference numeral 203 indicates network information, reference numeral 204 represents channel information, reference numeral 205 shows program starting time/duration information, reference numeral 206 shows a program content description, reference numeral 207 indicates program identification information, reference numeral 208 represents a data sort, reference numeral 209 is a data name, reference numeral 210 indicates a data size, and reference numeral 211 shows a data main body. Also, reference numeral 401 is display information, reference numeral 402 shows process information, reference numeral 403 indicates a mono-media list, reference numeral 501 represents a still image area, reference numeral 502 denotes a moving picture area, reference numeral 503 indicates a text area, reference numeral 504 represents a program table area, reference numeral 701 shows a file name, reference numeral 702 denotes a write position, reference numeral 901 indicates program table forming/display means, reference numeral 902 denotes display control means, reference numeral 1001 shows a file name list, reference numeral 1002 indicates a data name, reference numeral 1003 indicates a data sort, and reference numeral 1101 shows a display script.

### <Best Mode for Carrying out the Invention>

An embodiment mode of the present invention will now be described based upon drawings.

### (EMBODIMENT MODE 1)

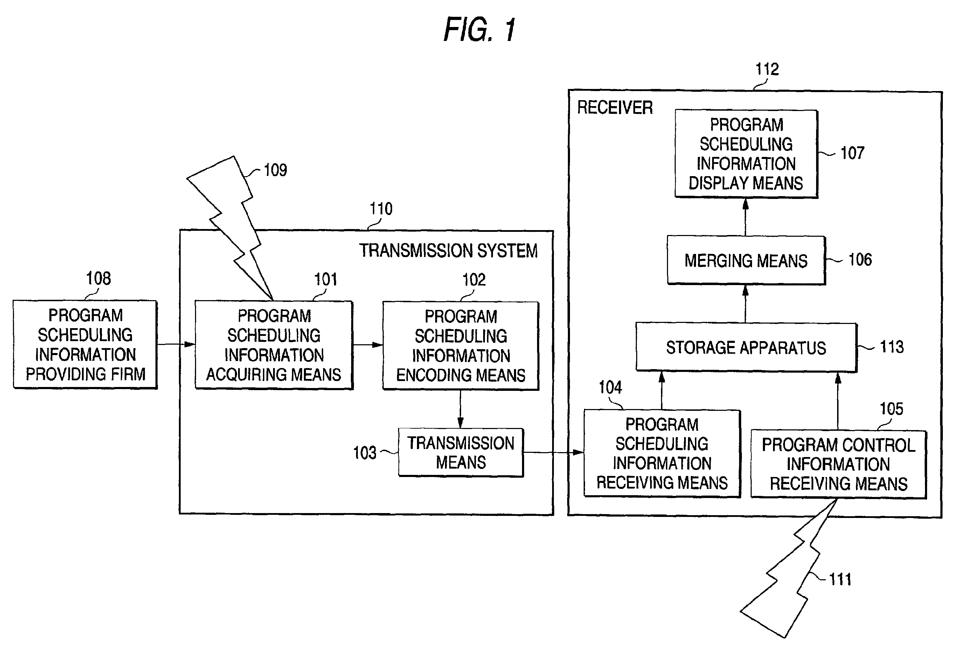

Fig. 1 is a block diagram for indicating an example of a broadcasting system which is arranged by a transmission system and a receiver functioning as a reception system, according to the present invention. The transmission system 110 is provided with a program editing acquiring means 101, a program scheduling information encoding means 102, and a transfer means 103. The program scheduling information acquiring means 101 acquires broadcasting program scheduling information from a program scheduling information providing firm 108, broadcasting networks 109, and the like. The program scheduling information encoding means 102 codes the acquired program scheduling information by a designated encoding system. The transfer means 103 transfers coded data. The receiver 112 is provided with a program scheduling information receiving means 104, a program scheduling information display means 107, a program control information receiving means 105, a merging means 106, and a storage apparatus 113. The program scheduling information receiving means 104 receives program lineup information transferred from the transmission system 110. The program scheduling information display means 107 displays thereon this received program scheduling information. The program control information receiving means 105 receives program control information from broadcasting networks. The program control information describes therein a program content, program starting time, program duration, and the like. The program content is updated in real time due to a special newscast, and an extension of a sports broadcasting program. The merging means 106 updates the content of the program scheduling information from the content of the program control information. The storage apparatus 113 stores thereinto both the program scheduling information and the program control information.

Next, a description will now be made of operations in the case that the transmission system 110 transmits program scheduling information. The program scheduling information acquiring means 101 acquires broadcasting program scheduling information from the program scheduling information providing firm 108 and/or the broadcasting networks 109. The program scheduling information providing firm 108 may provide information of other networks (for example, in case that the present invention is applied to BS (Broadcasting Satellite) digital broadcasting system, analog broadcasting system, CATV, CS (Communication Satellite) digital broadcasting system and the like are provided as other networks). Also, program scheduling information provided by the program scheduling information providing firm 108 may be constituted by not only a text, but also various sorts of mono-media data such as moving pictures, still images, and voice, and further, a skeleton of a multimedia EPG application capable of realizing various power of expressions with employment of these mono-media data. The skeleton of the multi-media EPG application contains necessary information which is required to form the multimedia EPG application by the program scheduling information encoding means 102 (will be explained later) . As an example of program scheduling information acquired from the broadcasting networks 109, digital video broadcasting (DVB) SI is provided. The program scheduling information acquired by the program scheduling information acquiring means 101 is transferred to the program scheduling information encoding means 102. The program scheduling information encoding means 102 automatically produces a multimedia EPG application from a skeleton of the supplied multimedia EPG application, and also the program scheduling information acquired from the mono-media data and the broadcasting networks 109. The produced multimedia EPG application is supplied to the transfer means 103. For example, in such a case of a BS digital broadcasting system, the multimedia EPG application is coded as a BML. The transfer means 103 sends out the supplied coded data based upon a protocol of anetwork. For instance, in the case of a BS digital broadcasting system, the coded data is sent out as an data broadcasting. In the case of the Internet, the coded data is registered into a Web server.

Next, a description will now be made of such operations that the receiver 112 receives the coded multimedia EPG application transmitted from the transmission apparatus 110. When the program scheduling information receiving means 104 acquires the coded multimedia EPG application which is sent out from the transmission apparatus 110 as the program scheduling information, the program scheduling information receiving means 104 decodes this coded multimedia EPG application, and then, stores the decoded multimedia EPG application into the storage apparatus 113. The method for acquiring the coded multimedia EPG application may depend upon a transfer protocol. For instance, in the case of the BS digital broadcasting system, this multimedia EPG application acquisition method may be realized by receiving an data broadcasting. Also, in the case of the Internet, this multimedia EPG application acquisition method may be realized by such a manner that the program scheduling information receiving means 104 periodically accesses a Web server into which the multimedia EPG application data has been stored, and then, downloads the multimedia EPG application data. In general, since data acquired by the program scheduling information receiving means 104 contain still images, moving picturers, voice and the like, data amounts of these data are large. As a result, these data are acquired several times per one day at a preselected time duration by the program scheduling information receiving means 104, and the acquired data are stored in the storage apparatus 113 employed in the receiver. For instance, in the case of the BS digital broadcasting system, the application acquisition method may be realized by such a manner that an data broadcasting for broadcasting program for broadcasting a multimedia EPG application is broadcasted several times per one day. In the case of the Internet, the application acquisition method may be realized by such a manner that the program scheduling information receiving means 104 accesses a Web server into which multimedia EPG application data has been stored several times per one day.

To the contrary, a data amount of program control information 111 received by the program control information receiving means 105 is smaller than the data amount of the above-described multimedia EPG application, and this program control information 111 corresponds to such data capable of accepting a real-time change in a broadcasting program. As a result, such information related to the latest program is continuously transmitted in a periodic manner. This program control information 111 corresponds to the SI signal used in the BS digital broadcasting system. As a consequence, the program control information receiving means 105 continuously monitors the program control information 111 which is transmitted in a periodic manner. When the program control information 111 is updated, the program control information receiving means 105 acquires this updated program control information 111 so as to be stored into the storage apparatus 113.

The merging means 106 compares a multimedia EPG application with program control information. When there is a difference between the multimedia EPG application and the program control information, the merging means 106 reflects the content of the program control information to the multimedia EPG application. As a result, the multimedia EPG application may become the latest information. The program editing display means 107 corresponds to such a means for displaying a multimedia EPG application. In a BS digital broadcasting system, a BML engine corresponds to this program editing display means 107.

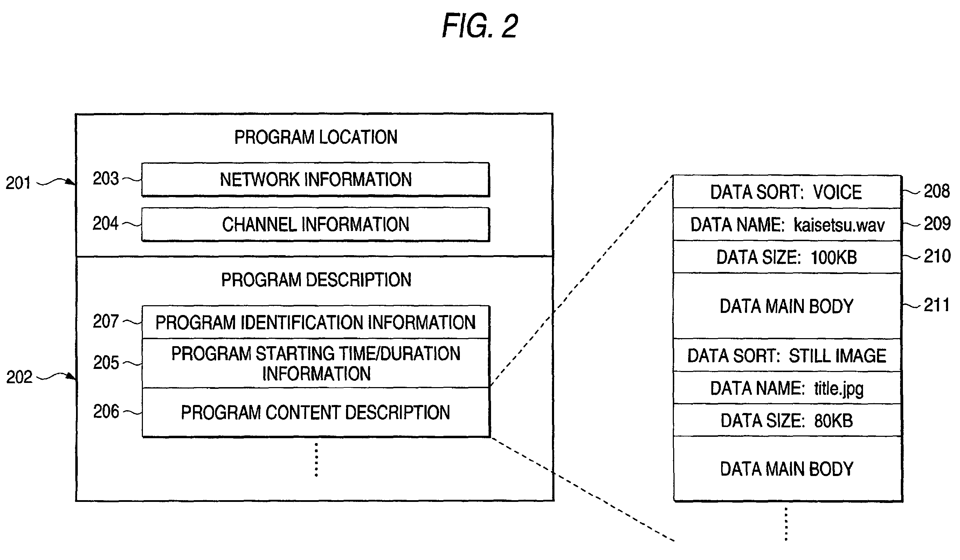

Referring now to Fig. 2, the program scheduling information will be described. Fig. 2 shows an example of the program scheduling information. The program scheduling information is constructed of program location 201 and a program description 202. The program location 201 is constituted by network information 203 and channel information 204. The channel information 203 identifies a network through which a program is transferred. The channel information 204 indicates that a program is transferred via which channel of this network. Based upon the network information 203, program information of other media may be described. The program description 202 is constituted by program identification information 207, program starting time/duration information 205, and a program content description 206. The program identification information 207 identifies a program within a channel. The program starting time/duration information 205 indicates that what time this program is started to be broadcasted and how many minutes broadcasting of this program is continued. Programs transferred via a plurality of broadcasting media such as a ground wave broadcasting system, a CATV system, and a satellite broadcasting system may be identified based upon both the program location 201 and the program identification information 207.

The program content description corresponds to multimedia information which is constituted by a moving picture, a still image, voice, a text, and a script, which explain a content of a program. As an example of program information acquired from a broadcasting network, DVB SI is provided. The program content descriptions 206 of the DVB SI are composed of text information. The program content description 206 of program scheduling information transmitted from the program scheduling information firm 108 corresponds to the case of a text, and/or the case of multimedia information. Next, a description will now be made of a data structural example of the program content description 206. The data sort 208 corresponds to a sort of this data. The data name 209 corresponds to a name of data used when this data is called from an application. The data size 210 corresponds to a data length. A data main body 211 stores thereinto data. In the example of Fig. 2, the program content description 206 is constituted by voice data and still image data. The program content description corresponds to a list of mono-media data which constitute the program content.

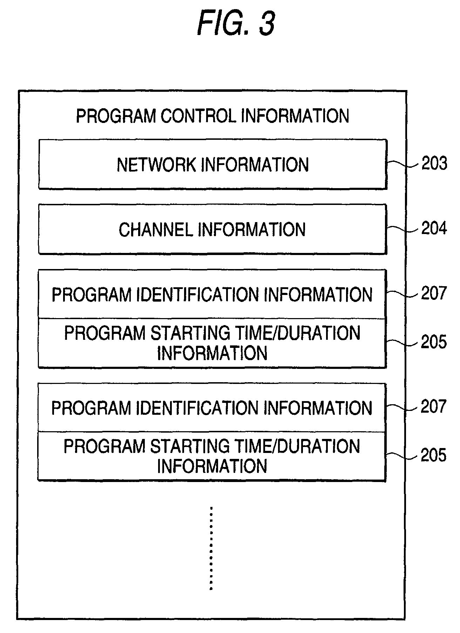

Fig. 3 shows an example of the program control information. The program control information is to support executions of recording/viewing reservations of the receiver. This program control information is arranged by the latest program location 201, the program identification information 207, and the program starting time/duration information 205. In this BS digital broadcasting system, the p/fEIT of SI corresponds to this program control information. The program control information is continuously sent out in a periodic manner. When program broadcasting time is changed, this program control information is updated in real time, and then, the updated program control information is sent out.

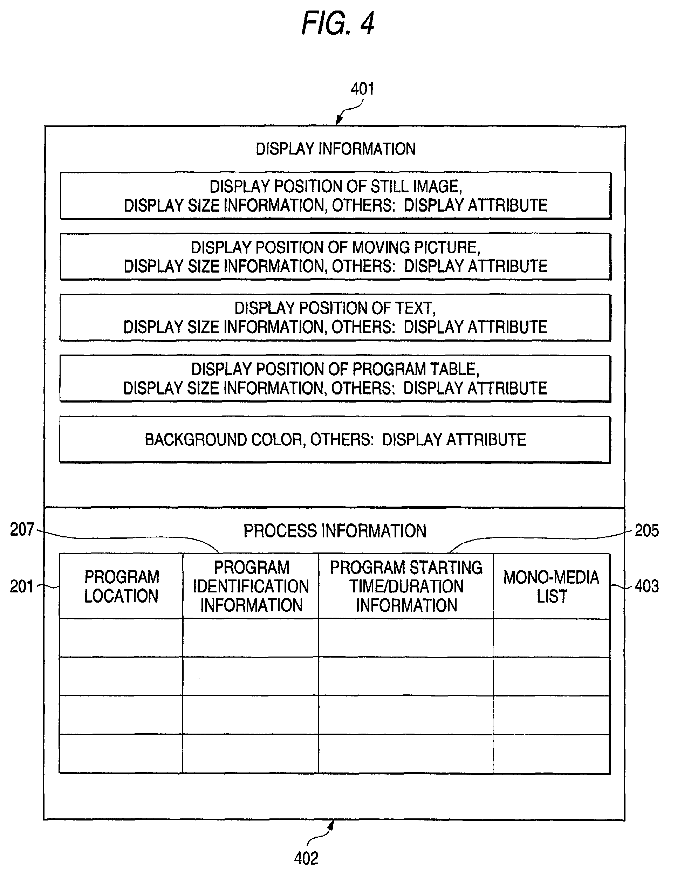

Fig. 4 shows a skeleton of a multimedia EPG application supplied from the program scheduling information providing firm 108. The skeleton of the multimedia EPG application is constituted by display information 401 and process information 402. The display information 401 indicates both a display position and a display attribute of each of the mono-media data. The process information 402 describes a process operation with a program table is selected. In the display information 401, a display position of a still image, a display position of a moving picture, a display position of a text, and also a display position of a program table are described. Based upon this information, a multimedia EPG screen display intended by the program scheduling information providing firm 108 may be realized. The process information 402 is constituted by the program location 201, the program identification information 207, the program starting time/duration information 205, which are required to form a program table, and also a mono-media list 403 for performing display and reproduce operations when a program is selected. In the process information 402, no description is made as to the program scheduling information acquired by the broadcasting signal saves 109. Since the content of the program scheduling information acquired based upon the broadcasting networks 109, the multimedia EPG application is produced. It should be noted that in this example, the example of the skeleton of the multimedia EPG application is represented by the table structure. Alternatively, the skeleton may be described by using such a language as an XML and a BML.

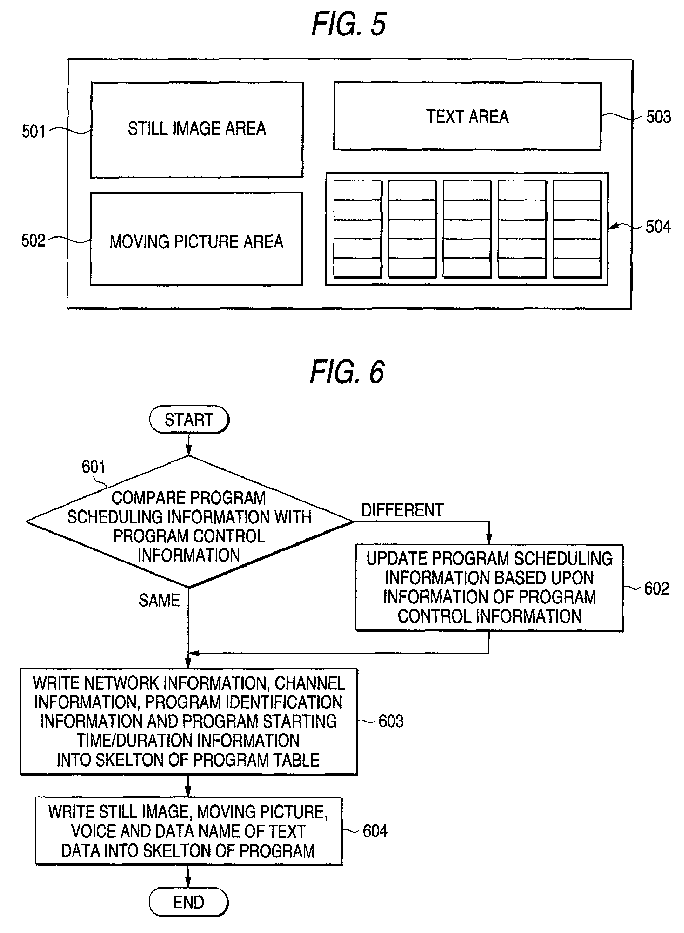

A skeleton of a multimedia EPG application may define a display screen of the multimedia EPG application based upon a display attribute. Fig. 5 shows a screen example of a multimedia EPG application. This multimedia EPG application screen is constituted by a still image area 501, a moving picture area 502, a text area 503, and a program table area 504 on which information related to a program selected by a cursor is displayed.

Next, a description will now be made of a method for forming a multimedia EPG application, while the program scheduling information encoding means 102 employs a skeleton of the multimedia EPG application. The program scheduling information encoding means 102 forms the multimedia EPG application by embedding both the program location 201 of the program scheduling information and the information of the program description 202 into the process information 402 of the skeleton of this multimedia EPG application.

Fig. 6 is a flow chart for indicating a forming sequence of the multimedia EPG application. The program scheduling information encoding means 102 compares program control information supplied from the program scheduling information acquiring means 101 with program scheduling information, and then checks as to whether or not the program starting time/duration information 205 thereof is not different from each other (step 601). When such a difference is present, the information described in the program control information is overwritten in the program scheduling information, so that the program scheduling information is updated as the latest information (step 602). In order to produce the program table 504, this may be realized by writing the program location 201, the program identification information 207, and the program starting time/duration information 205 into corresponding fields of the process information 402 to the skeleton (step 603). With respect to a still image, a moving picture, a text, and voice, since the data name 302 described in the program content description 206 is written into the mono-media list 403 of the process information 402, when a program of the program table is selected by using the cursor, voice data (speech data) may be reproduced in such a manner that the corresponding still image, moving picture, and text are called based upon the embedded data names (step 604). In such a case that no data is contained in the program scheduling information (for example, such data as still image, moving picture, and voice are not contained in such program scheduling information acquired from the DVB SI) data of previously determined default is written into the mono-media list 403.

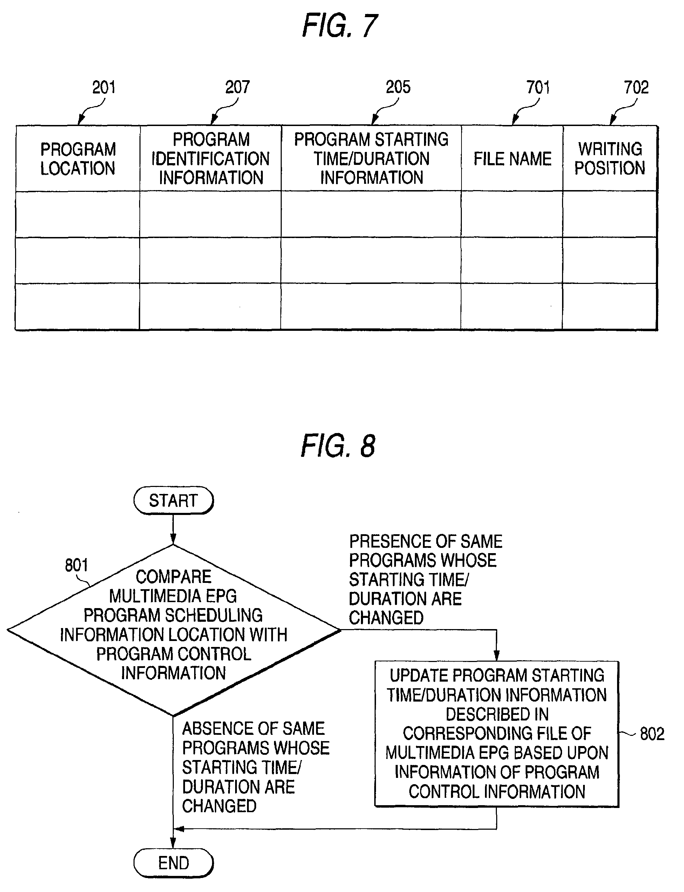

The program scheduling information encoding means 102 acquires a log of the process operation defined in the step 603, and forms multimedia EPG program scheduling information location based upon this acquired log. A structure of the multimedia EPG program scheduling information location is indicated in Fig. 7. A file name 701 corresponds to a file name of such a file into which the corresponding program location 201 and the program information of the program identified by the program identification information 207 when the above-described multimedia EPG application is formed. In the above-described example, this file name 701 may constitute a file name of such a file into which the process information 402 is described. A position 702 describes where the program location and the program information are written into a write-destination file. The multimedia EPG program scheduling information location describes that the corresponding program scheduling information is described in which portion of the files for constituting the multimedia EPG application.

The program scheduling information encoding means 102 processes various data such as a still image, a moving picture, voice and a text, which constitute the multimedia EPG application, while the respective data names are employed as file names. Then, the program scheduling information encoding means 102 codes these files, the multimedia EPG application, and the multimedia EPG program scheduling information location which are formed in the above-described manner based upon a predetermined encoding system (for instance, in case of BS digital broadcasting system, encoding rule is defined by ARIB B-24), and supplies the coded items to the transfer means 103. The transfer means 103 transfers the data. The program scheduling information acquiring means 101 continuously monitors as to whether or not the program control information is updated. In the case that the program control information is updated, the program scheduling information acquiring means 101 supplies this updated program control information to the program scheduling information encoding means 102. The program scheduling information encoding means 102 may be immediately adapted to a change in program editing in such a manner that while employing both the latest program control information and the program scheduling information which has been previously supplied from the program scheduling information acquiring means 101, the program scheduling information encoding means 102 executes both the forming operation and the encoding operation of the multimedia EPG application in accordance with the above-described forming sequence of the multimedia EPG application. Thereafter, the program scheduling information encoding means 102 supplies the resultant multimedia EPG application to the transfer means 103, and the data is transferred from the transfer means 103.

Referring now to Fig. 8, a description will be made of a merging system for a multimedia EPG application corresponding to program scheduling information, and program control information, which is performed by the merging means 106 employed in the receiver 112. The merging means 106 compares multimedia EPG program scheduling information location which is received by the program scheduling information receiving means 104 and is stored into the storage apparatus 113 with the latest program control information which is received by the program control information receiving means 105 and is stored into the storage apparatus 113, and checks as to whether or not starting time/duration of program is changed within the same program (step 801). If there is the changed starting time/duration of the program, then the merging means 106 refers to the file name 701 and the writing position 702 of the multimedia EPG program edition information location corresponding to this program, and rewrites the starting time/duration of the program which is described in the corresponding file (step 802). Since this process operation is carried out with respect to all of the program described in the program control information, the multimedia EPG application is rewritten into the last information. Also, in the case that such a program which is not described in the latest program control information is present in the multimedia EPG program scheduling information location, this program is regarded by that broadcasting of this program is postponed, and is deleted from the program table of the multimedia EPG application. A method of deleting the program from the program table may depend upon a description language of a multimedia EPG application.

As previously described, in accordance with this embodiment mode 1, when the multimedia EPG application is initiated on the receiver 112, the latest program information is displayed on such a display screen of Fig. 5. When the program is selected by using the cursor and/or the button is clicked, the data files which are linked in the data name may be displayed on the areas determined with respect to the sort of data, or may be reproduced. As a consequence, such a multimedia EPG service capable of accepting the changed program and also accepting a plurality of media can be provided in accordance with the following manner. That is, while the program scheduling information is acquired from the program scheduling information providing firm and the broadcasting networks, the multimedia EPG application is produced form these acquired program scheduling information and then is transmitted. The receiver merges the multimedia EPG application into the program control information. Also, the center acquires the program control information and updates the multimedia EPG application. Therefore, the center can provide the multimedia EPG application containing the updated information to the receiver even which cannot acquire the program control information.

### (EMBODIMENT MODE 2)

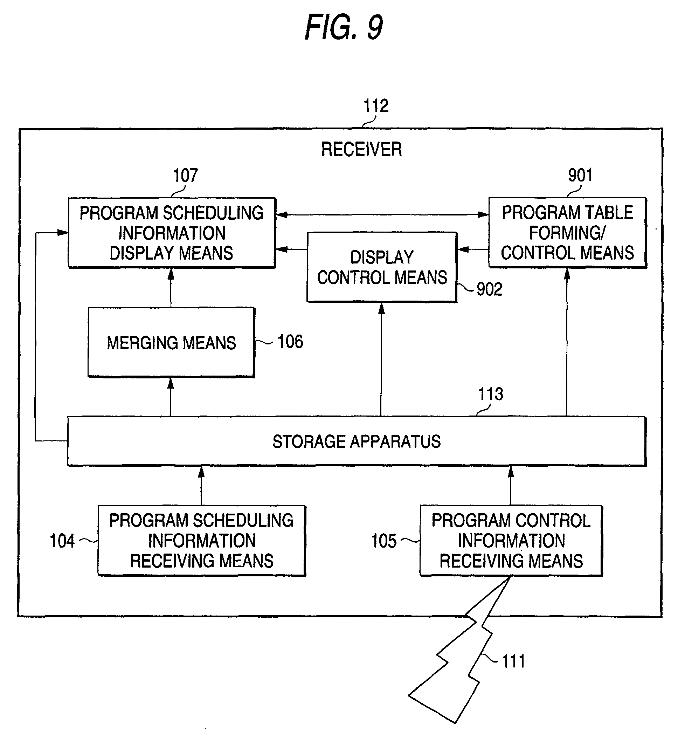

Next, an embodiment mode 2 of the present invention will now be explained with reference to drawings. Fig. 9 is a block diagram for representing an example of a receiver according to the embodiment mode 2. While broadcasting networks 111 are transmitted in a periodic manner, program control information which is updated in real time is received. In the case of a BS digital broadcasting system, since program scheduling information is also transmitted in a periodic manner in combination with the program control information, the program control information can be received at the same time. A program table forming/display means 101 forms a program table from the program control information, and then displays the formed program table. In the case of the BS digital broadcasting system, a program table may be formed/displayed by using also program scheduling information which is transmitted in combination with program control information. Since the program table forming/display means 901 corresponds to an application program installed on a receiver, a program table may be displayed in a specific manner, depending upon a manufacturer of the relevant receiver. A display control means 902 notifies such an instruction that which information is provided to a program scheduling information display means 107 by employing link information sent from a transmission system 110 when a viewer selects a program of a program table.

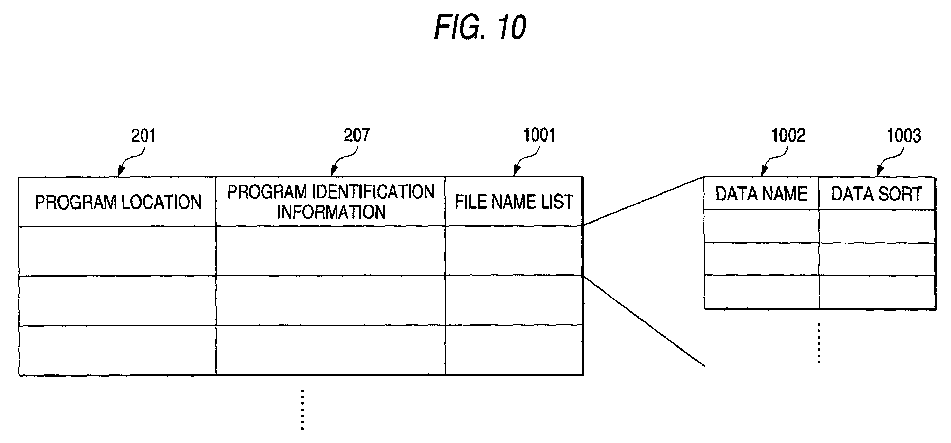

A content of link information will now be explained with reference to Fig. 10. The link information indicates network information 203, channel information 204, a program specified by program identification information 207, and a file name list 1001 of program information such as a still image, a moving picture, voice, and a text, which correspond to this program. The file name list corresponds to a list containing a data name 1002 and a data sort 1003 as an element.

Next, operations of the transmission system 110 according to this embodiment mode 2 will now be described. In this example, the above-described multimedia EPG application screen of Fig. 9 is employed as an example. The program scheduling information acquiring means 101 acquires program information from either a program scheduling information providing firm 108 or broadcasting networks 109. A content of the program information is similar to that of the embodiment mode 1. The program scheduling information acquiring means 101 supplies both the program information and a skeleton application to a program scheduling information encoding means 102. In this model application, only such a process is described by which various sorts of data are displayed at the display positions as shown in Fig. 5 so as to realize the application of Fig. 5.

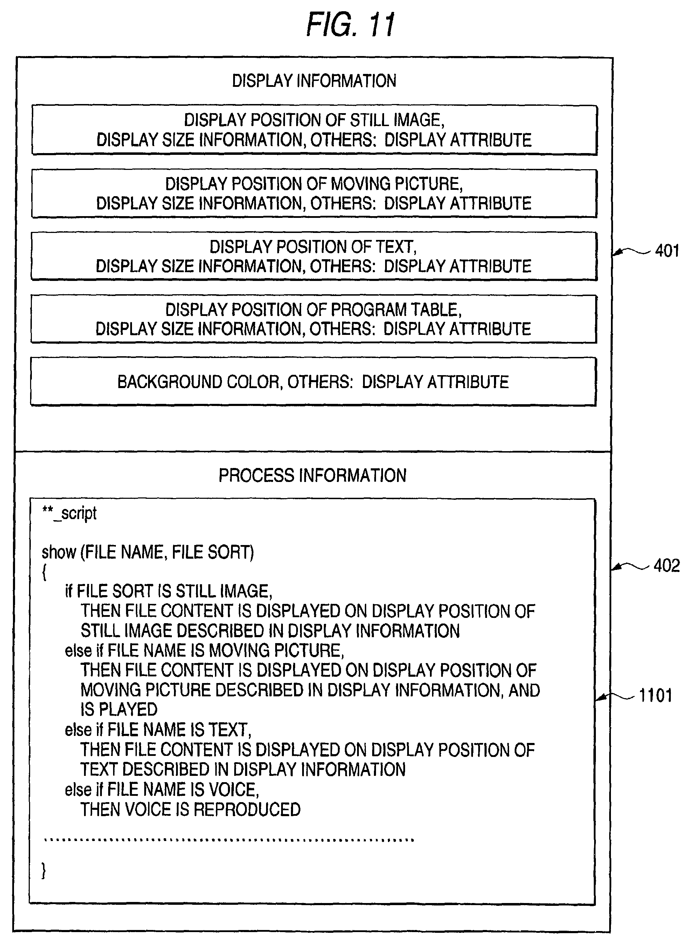

Fig. 11 represents an example of a skeleton of a multimedia EPG application supplied from the information editing information providing firm 108. The skeleton of the skeleton application multimedia EPG application is constituted by display information 401 and process information 402. The display information 401 indicates both display positions and display attributes of the respective mono-media data. The process information 402 describes a process operation when a program table is selected. In this process information 402, a display script 1101 is described. When a designation is made of a file name and a sort (still image, moving picture, voice, text etc.) of the file, the display script 1101 displays the designated content of the file at a display position in correspondence with the sort of this file (in case of voice, voice is reproduced) . In this example, when the file sort is voice data, voice is reproduced. A program scheduling information encoding means 102 automatically forms link information from program information.

The program scheduling information encoding means 102 processes various data such as a still image, a moving picture, voice, and a text, which constitute the multimedia EPG application, while the respective data names are employed as file names. Then, the program scheduling information encoding means 102 codes these files, the above-described skeleton application, and the link information in accordance with a predetermined encoding system (for instance, in case of BS digital broadcasting system, encoding rule is defined by ARIB B-24), and supplies the coded items to a transfer means 103. The transfer means 103 transfers the data.

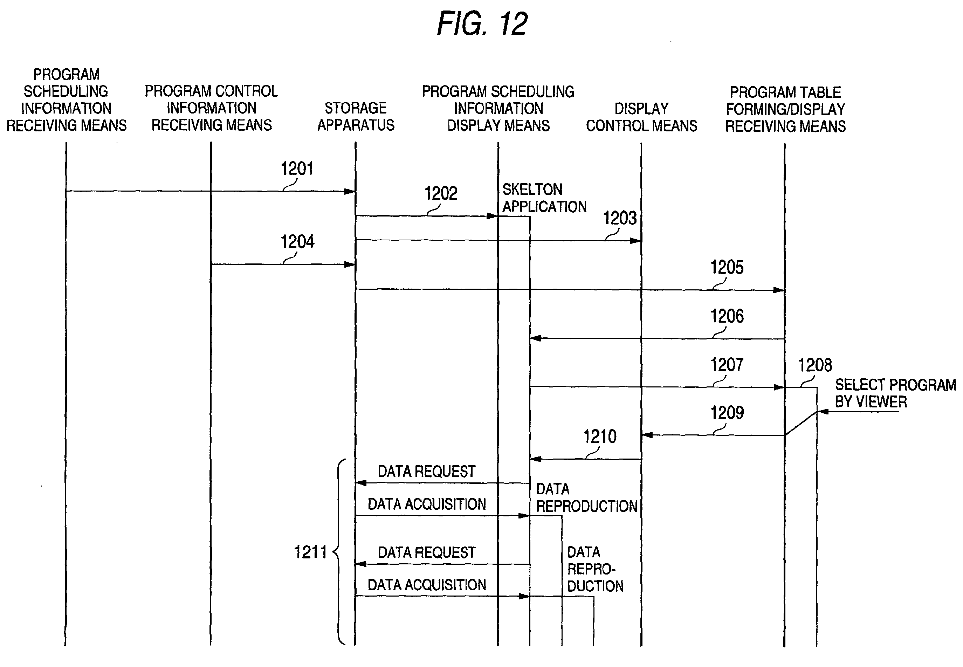

Referring now to Fig. 12, a description will be made of operations of the receiver in the case that this receiver receives mono-media files (still image, moving picture, voice, text etc.) which constitute the skeleton application, the link information, and the multimedia EPG application. When the program scheduling information receiving means 104 receives mono-media files (still image, moving picture, voice, text etc.) which constitute the skeleton application, the link information, and the multimedia EPG application, this program scheduling information receiving means 104 stores these received mono-media files into the storage apparatus 113 (step 1201). The program scheduling information display means 107 senses such a fact that the skeleton application is stored into the storage apparatus 113, and then, executes the skeleton application. The skeleton application merely designates display positions of the still image, the moving picture, and the text, and also the program list. This skeleton application causes only frames indicative of these display positions to be displayed (step 1202). Next, the display control means 902 senses such a fact that the link information is present in the storage apparatus 113, and then reads this link information. As a result, the display control means 902 saves a correspondence relationship between programs and mono-media files related to these programs (step 1203).

The program control information receiving means 105 acquires program control information, and then stores this acquired program control information into the storage apparatus 113 (step 1204). The program table forming/display means 901 forms a program table from the program control information stored in the storage apparatus 113 (step 1205). In order to execute a display of the program table, the program table forming/display means 901 issues a display position request of the program table to a skeleton application initiated on the program scheduling information display means 107 (step 1206). The skeleton application initiated on the program scheduling information display means 107 designates the display position of the program table so as to request the program table forming/display means 901 to display the program table (step 1207). The program table forming/display means 901 displays the formed program table on the designated position (step 1208).

Next, operations in the case that a viewer selects a program from a displayed program table will now be described. The program table forming/display means 901 supplies network information, channel information, and program identification information, which may identify the program designated by the viewer (step 1209). The display control means 902 acquires a file name list corresponding to the network information, the channel information, and the program identification information, which are supplied by employing the saved link information. The display control means 902 supplies the acquired file name list to the skeleton application initiated on the display editing information display means 107, and then, issues such a display request for a content of a file by using a data name and a data sort listed in the file name list (step 1210). The skeleton application initiated on the program scheduling information display means 107 specifies that which file stored in the storage apparatus 113 may be displayed and reproduced based upon a data name. Then, the skeleton application executes a display script 1101, while both the data name and the data sort are used as a parameter. As a result, the skeleton application executes to display/reproduce the designated data. This operation is repeatedly carried out with respect to the data names and the data sorts described in the file name list (step 1211).

As previously described, in accordance with this embodiment mode 2, such a multimedia EPG service capable of accepting the program change and also a plurality of media can be provided in the following manner. That is, the program scheduling information such as the still image and the moving picture is acquired from the program scheduling information providing firm and the broadcasting networks, and then, transmits the acquired program scheduling information in connection with the skeleton application, and this program scheduling information and the skeleton application are processed in conjunction with the program table which is produced from the program control information acquired from the broadcasting networks on the side of the receiver. Also, in accordance with this embodiment mode 2, all of information are not processed by the layout by using the multimedia EPG application. Moreover, as to the program list, since the application installed in the receiver performs forming and displaying of the program list, a manufacturer of a receiver may display a specific observation of the own manufacturer with respect to the multimedia EPG application.

### <INDUSTRIAL APPLICABILITY>

As previously described, in the broadcasting system according to the present invention, since the program control information is combined with the data broadcasting application, it is possible to realize the multimedia EPG service capable of having high power of expressions and also having superior real-time characteristics, while the program control information such as an SI is broadcasted in the periodic manner, the size thereof is relatively small, and this program control information is updated in real time, whereas the data broadcasting application is arranged by the moving picture, the still picture, and the voice, and the size thereof is large, so that this data broadcasting application is transmitted only in a predetermined time range.

## Claims

1. A transmission system comprising:
program scheduling information acquiring means for acquiring program scheduling information from an externally-provided program scheduling information providing firm and a broadcasting network;
program scheduling information encoding means for encoding the acquired program scheduling information in accordance with a designated encoding method; and
transfer means for transferring the coded data.

2. A transmission system as claimed in claim 1 wherein said designated encoding method is a encoding method for controlling a display.

3. A transmission system as claimed in claim 1 wherein said designated encoding method corresponds to an XML (extensible marking language).

4. A transmission system as claimed in claim 1 wherein said transfer means transmits update information which is updated in real time.

5. A transmission system as claimed in claim 1 wherein said transmission system is comprised of:
an information providing unit for providing the coded information to a network other than the broadcasting network.

6. A transmission system as claimed in claim 1 wherein said designated encoding method corresponds to an HTML (hyper text markup language).

7. A receiver comprising:
storage means for storing thereinto both program scheduling information and program control information which is updated in real time; and
merging means for merging the stored program control information with the stored program scheduling information to thereby produce new program scheduling information.

8. A receiver as claimed in claim 7 wherein said receiver is comprised of:
program scheduling information receiving means for receiving program scheduling information; and
program scheduling information display means for displaying thereon received data.

9. A receiver as claimed in claim 7 wherein said receiver is comprised of:
program control information receiving means for receiving the program control information which is updated in real time.

10. A transmission system as claimed in claim 4 wherein said program control information corresponds to at least a program content, a program starting time instant, and program duration, which are updated.

11. A receiver as claimed in claim 7, or claim 9 wherein said program control information corresponds to at least a program content, a program starting time instant, and program duratioin, which are updated.

12. A transmission system as claimed in claim 4 wherein said transmission system is comprised of:
program scheduling information encoding means for generating link information in which a relationship between the program control information and the program scheduling information is described; and
transfer means for transmitting the link information.

13. A receiver as claimed in claim 9 wherein said receiver is comprised of:
program table generating/display means for generating a program table from program control information, and for displaying the produced program table.

14. A receiver as claimed in claim 13 wherein both the program scheduling information and the program table are displayed in conjunction with each other by display control means for managing a relationship between the program control information and the program scheduling information based upon the link information so as to control displays of the program scheduling information and the program table.

15. A transmission system as claimed in claim 1 wherein information which is updated in real time is acquired by program scheduling information acquiring means.

16. A receiver as claimed in claim 8 wherein said receiver is comprised of:
a storage apparatus for previously storing thereinto program scheduling information.

17. A receiver as claimed in claim 16 wherein the program scheduling information is acquired from at least one of the broadcasting network, the operated storage apparatus, and the network.

18. A receiver as claimed in claim 16 wherein the latest program information is continuously provided by that while the program control information is received in real time, both the program information and the program control information are united to be displayed.

19. A receiver as claimed in claim 13 wherein the program control information is acquired from at least one of the broadcasting network, the operated storage apparatus, and the network.

20. A receiver as claimed in claim 16 wherein the program scheduling information is constituted by more than one mono-media.

21. A receiver as claimed in claim 20 wherein the mono-media is constituted by a still image, a moving picture, or voice.

22. A receiver as claimed in claim 13 wherein said receiver displays program information related to a program in addition to the program table.

23. A transmission system as claimed in claim 1 wherein the program scheduling information is constituted by program scheduling information of the own media, or other media.

24. A receiver as claimed in claim 7, or claim 9 wherein the program scheduling information is constituted by program scheduling information of the own media, or other media.

25. A broadcasting system comprising:
a transmission system equipped with program scheduling information acquiring means for acquiring program scheduling information from an externally-provided program scheduling information providing firm and a broadcasting network, and transfer means for transferring the program scheduling information by way of either a broadcasting network or a communication; and
a receiver equipped with: program scheduling information receiving means for receiving the program scheduling information from said transmission system; program control information receiving means for receiving from a broadcasting network and the like, program control information which describes therein a program content, program starting time, program duration, and the like, which are updated in real time due to a special newscast and an extension of a sports broadcasting program; and merging means for updating the content of the program scheduling information based upon the content of the program control information.

26. A broadcasting system comprising:
a transmission system in which link information describing therein a relationship between a content of program control information and a content of program scheduling information is transferred in connection with program scheduling information by transfer means; and
a receiver comprised of program table generating/display means for generating a program table from the program control information and for displaying the program table; and display control means for managing a relationship between program control information and program scheduling information based upon the link information so as to control displays of the program scheduling information and the program table, whereby the program scheduling information can be displayed in conjunction with the program table.
